Europäisches Patentamt

(19) European Patent Office

Office européen des brevets

(11) Publication number: **0 194 891**

**A1**

(12) **EUROPEAN PATENT APPLICATION**

(21) Application number: **86301846.1**

(22) Date of filing: **13.03.86**

(51) Int. Cl.⁴: **G 02 B 6/44**

(30) Priority: **13.03.85 GB 8506499**

(43) Date of publication of application:
**17.09.86 Bulletin 86/38**

(84) Designated Contracting States:
**DE FR NL**

(71) Applicant: **Telephone Cables Limited
Chequers Lane
Dagenham Essex RM9 6QA(GB)**

(72) Inventor: **Ashpole, Raymond Sydney
4, The Martins Drive Linslade
Leighton Buzzard Bedfordshire, LU7 7OQ(GB)**

(72) Inventor: **Fielder, Norman Charles
48 Elmgrove Road
Harrow Middlesex(GB)**

(74) Representative: **Kirby, Harold Victor Albert
Central Patent Department Wembley Office The General
Electric Company, p.l.c. Hirst Research Centre East Lane
Wembley Middlesex HA9 7PP(GB)**

(54) Optical fibre assemblies and optical fibre cables.

(57) A plurality of optical fibres each having a protective coating of U.V.-cured synthetic resin are held together by means of a further coating of U.V.-cured synthetic resin compatible with and bonded to the protective coatings. The fibres are preferably disposed side by side to form a ribbon.

Fig.1.

-1-

## Optical Fibre Assemblies
## and Optical Fibre Cables

This invention relates to optical fibres, and more especially to assemblies of such fibres for use in, or as optical fibre cables, and to the manufacture thereof.

Optical fibres are commonly provided with protective coatings comprising one or more layers of a synthetic resin, and an object of this is to provide an assembly of such fibres for use as an optical fibre cable or as an element in a cable. A further object is to provide a method of manufacturing such an assembly.

According, therefore, to one aspect of the invention a plurality of optical fibres each having a protective coating of U.V.-cured synthetic resin are held together in a parallel relationship by means of a further coating of U.V.-cured synthetic resin compatible with and bonded to said protective coatings.

Preferably the protective coatings and said bonding coating consist of the same material, and this is preferably a U.V.curable epoxy-acrylate.

This material has been found to be particularly advantageous as it possesses a low tensile modulus and good microbending resistance at low temperatures, besides being readily strippable from the fibres when necessary. Moreover it is curable very rapidly.

The coated fibres are conveniently disposed side-by-side in the form of a ribbon with the sides of adjacent fibres held in contact by the bonding coating.

The ribbon can either be flat or curved, and may be twisted or coiled into the form of a helix.

The protective coating on one or more of the fibres may be coloured for identification purposes, the bonding coating then preferably being transparent.

In the manufacture of an optical fibre assembly in accordance with the invention, the fibres, each with a protective coating, are passed simultaneously, but spaced apart, through a coating station at which the synthetic resin,in liquid form and bondable to the protective coatings, is applied to the fibres, the fibres are then passed through an opening in a die shaped so as to urge the fibres towards each other in a required relationship, and then through a curing station at which the liquid synthetic resin is subjected to U.V. radiation so as to harden the resin and bond the fibres together.

The curing station conveniently comprises an enclosure accommodating one or more U.V. lamps, a substantially oxygen-free atmosphere for example of nitrogen preferably being maintained within the enclosure during the passage of the fibre assembly therethrough.

One optical fibre assembly and the manufacture thereof in accordance with the invention will now be described by way of example with reference to Figures 1 to 6 of the accompanying schematic drawings, in which

Figure 1 represents a sectional view of the optical fibre assembly,

Figures 2 and 3 represent a plan view, and a sectional elevation respectively of one form of apparatus suitable for manufacture of the assembly, and

Figures 4 to 6 illustrate various alternative constructions of optical fibre assemblies in accordance with the invention.

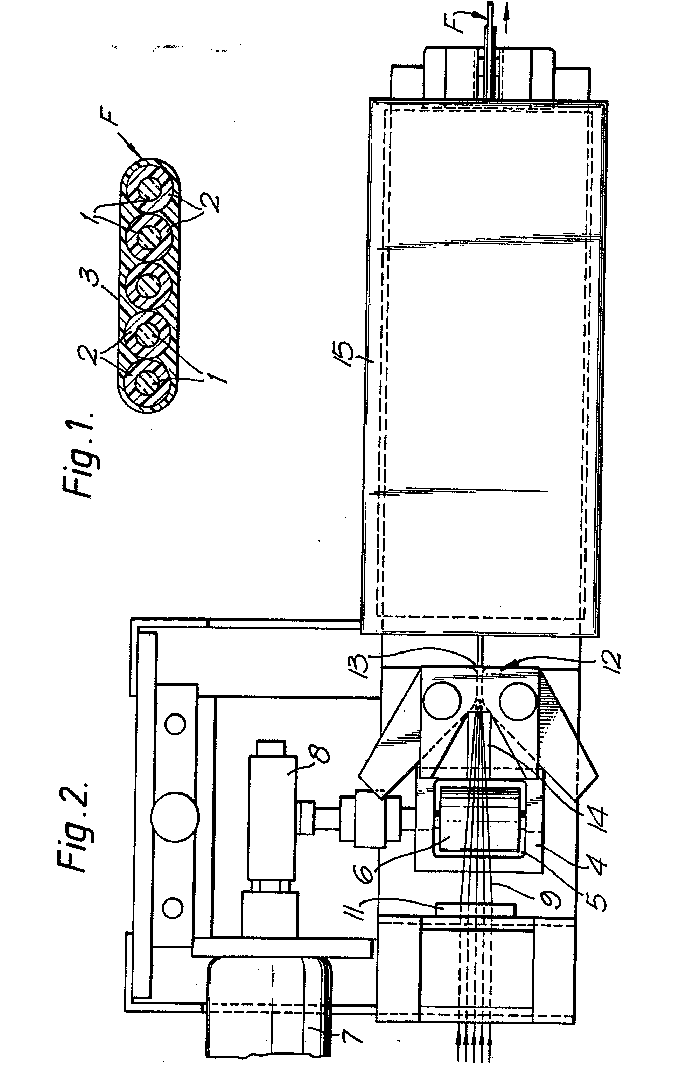

Thus referring to Figure 1 the optical fibre assembly F comprises five optical fibres 1, which may be of a monomode or multimode construction, each having a double epoxy acrylate U.V.-cured protective coating 2, the fibres being disposed side-by-side, as shown, with the surfaces of the protective coatings of adjacent fibres in contact with each other. Thus the separation of the fibres will be determined by the thickness of the coatings, and will usually be of the order of 250 to 500$\mu$m. Thus with fibres having an outside diameter of 125$\mu$m the coatings will normally be such as to increase the diameters to 250 or 500$\mu$m respectively. The fibres are bonded together, in accordance with the invention, so as to form, in effect, a flat ribbon, by a further coating 3, also of U.V.-cured epoxy-acrylate. The epoxy-acrylate is preferably that sold by DeSoto Inc.as DESOLITE 950-075, such material having a low tensile modulus at temperatures between $-40^{\circ}$C and $+60^{\circ}$C.

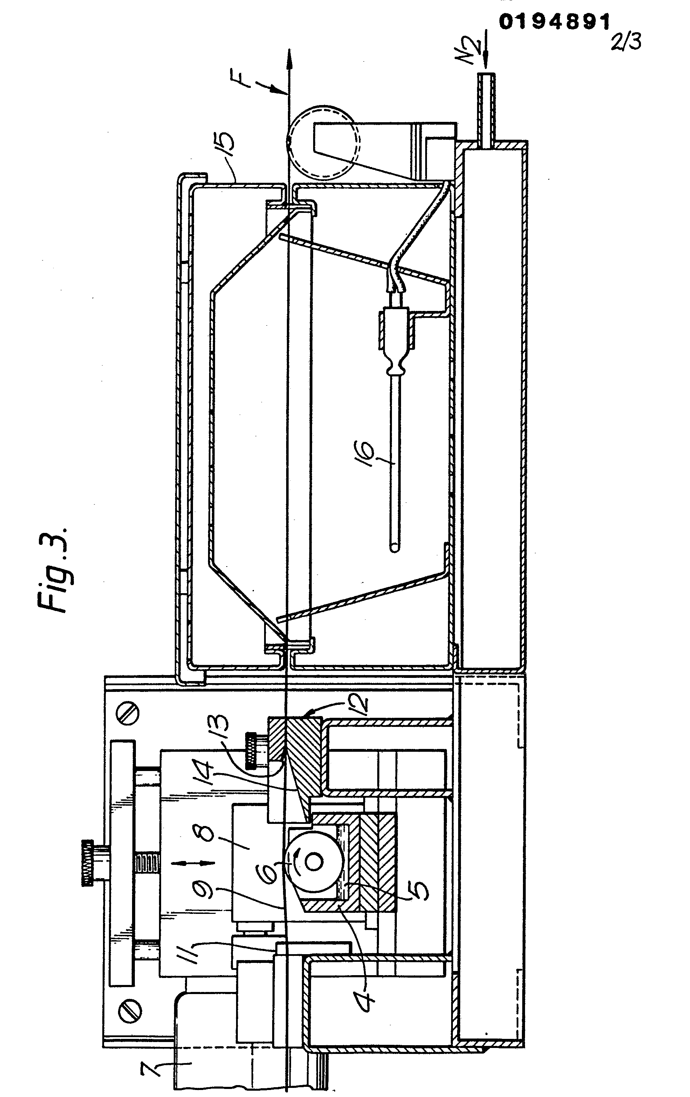

Apparatus suitable for forming such a fibre assembly is illustrated in Figures 2 and 3.

The apparatus comprises a bath 4 containing liquid epoxy-acrylate resin 5, and containing a roller 6 supported for rotation about a horizontal axis with the lower part of the roller below the level of the resin. The roller 6 is arranged to be driven at a controlled speed by an electric motor 7 through gearing 8. A plurality of optical fibres 9, five in this case, are fed, while lying in the same horizontal plane, through slots (not shown) in a guide 11 over the top of the roller 6, the fibres being spaced apart as they contact the roller. As the roller 6 rotates it carries on its surface a quantity of the resin 5 which is deposited on the fibres 9. The fibres then pass to a die 12 having an opening 13 whose dimensions are such that the coated fibres are brought into contact whilst still lying in a common horizontal plane, excess resin being removed by the die 12 and being returned to the bath 4 by a sloping surface 14.

The fibres 9 pass from the die 12 into an enclosure 15 containing an ultra violet lamp 16 which cures the resin 5 and bonds the fibres together in the form of a flat ribbon. Nitrogen is fed continuously through the enclosure 15 during this process to avoid oxygen inhibiting the polymerisation of the resin.

The bonded fibre assembly may then be fed onto a drum or spool (not shown).

Means are conveniently provided as at 17 for adjusting the height of the roller 6.

The protective coating of the fibres may be coloured for identification purposes, this being visible through the bonding coating of resin 5.

As the fibres are bonded together with the surfaces of their protective coatings in contact, substantially accurate spacing of the fibre axes is achieved,and in some cases it may be found possible to effect the mass splicing of the ends of the fibres of two fibre assemblies.

However the acrylate coatings can easily be removed by chemical means, using an appropriate solvent, heat or mechanical stripper, enabling the fibres to be readily separated for individual splicing if need be.

The particualr choice of the U.V. curable bonding resin can provide a soft coating to enable other protective finishes, e.g. polymer extrudates, to be applied, or a harder coating to enable the fibre assembly to be used on its own without additional protection, or for introduction into cable units. Thus the fibre assembly may be accommodated in a channel in a protective sheath, the latter conveniently being formed as an extrusion with a plurality of channels with one or more fibre assemblies in each said channel.

It will be appreciated that, although in the embodiment described, five optical fibres are shown, the invention is applicable to assemblies having a different number of fibres, Preferably, therefore the die 12 is adjustable or replaceable to permit the same apparatus to be used for the manufacture of assemblies with varying numbers of fibres.

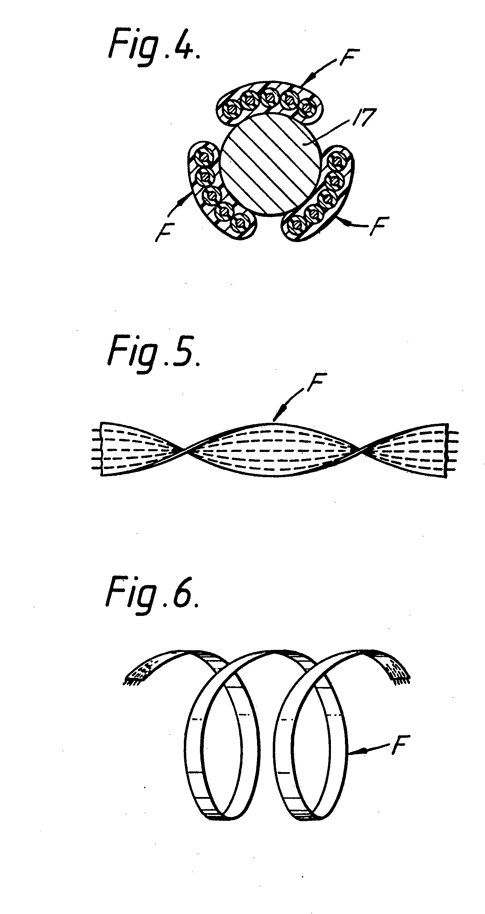

Although the fibre assembly F illustrated in Figure 1 is in the form of a flat ribbon, the fibres could be bonded in a part-cylindrical configuration as shown in Figure 4 to simplify wrapping round a central reinforcing member as at 17.

Moreover, if the resin is rigid enough on curing, the fibre assembly F could be profiled to give a twisted configuration as shown in Figure 5 or in the form of a helix as in Figure 6 with built-in allowable strain to avoid undue stresses being applied to the fibres in use. Alternatively the assembly could be formed with corrugations along its length. Other configurations are clearly possible.

# CLAIMS

1. An optical fibre assembly comprising a plurality of optical fibres each having a protective coating of U.V.-cured synthetic resin, wherein the fibres are held together in a parallel relationship by means of a further coating of U.V.-cured synthetic resin compatible with and bonded to said protective coatings.

2. An optical fibre assembly according to Claim 1 wherein the synthetic resin is an U.V.-cured epoxy-acrylate.

3. An optical fibre assembly according to Claim 1 or 2 wherein the optical fibres are disposed side-by-side in the form of a ribbon with the sides of adjacent fibres held in contact by the bonding coating.

4. An optical fibre assembly according to Claim 3 wherein the ribbon is twisted or is coiled into the form of a helix.

5. An optical fibre assembly according to Claim 3 or 4 wherein the protective coating on one or more of the fibres is coloured and the bonding coating is transparent.

6. The manufacture of an optical fibre assembly according to any preceding claim wherein the fibres, each with a protective coating, are passed simultaneously, but spaced apart, through a coating station at which the synthetic resin, in liquid form and bondable to the protective coatings, is applied to the fibres, the fibres are then passed through an opening in a die shaped so as to urge the fibres towards each other in a required relationship, and then through a curing station at which the liquid synthetic resin is subjected to U.V. radiation so as to harden the resin and bond the fibres together.

-8-

7.    The manufacture of an optical fibre assembly according to Claim 6, wherein the curing station comprises  an enclosure accommodating one or more U.V. lamps, and a substantially oxygen-free atmosphere is maintained within the enclosure during the passage of the fibre assembly therethrough.

8.    The manufacture of an optical fibre assembly according to Claim 6 or 7 wherein the fibres are passed into the enclosure side-by-side, and are bonded together by the hardened resin in the form of a ribbon.

9.    An optical fibre cable comprising or incorporating an optical fibre assembly according to any one of Claims 1 to 5.

Fig.2.

Fig.1.

Fig.3.

Fig.4.

F

17

F

F

Fig.5.

F

Fig.6.

F

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X,Y | EP-A-0 104 864 (BICC PLC)<br><br>* Page 1, lines 11-13, 21-23; page 2, lines 7-23; page 3, lines 8-12; page 5, lines 3-10, 15-21; figure 1 * | 1-3,5, 6,8,9 | G 02 B 6/44 |
| | --- | | |
| X | US-A-4 147 407 (B. EICHENBAUM et al.)<br>* Column 2, lines 25-40; column 9, lines 39-42; figures 4,6-8 * | 1 | |
| | --- | | |
| Y | ELECTRONICS & COMMUNICATIONS IN JAPAN, vol. 63, no. 8, August 1980, pages 69-77, Scripta Publishing Co., Silver Spring, Maryland, US; R. YAMAUCHI et al.: "Residual stresses of fibers in tape-type optical cable and their reduction"<br>* Page 69, column 1, lines 22-26; figures 2b,3,13 * | 1,3,5 | |
| | | | **TECHNICAL FIELDS SEARCHED (Int. Cl. 4)** |
| | | | G 02 B 6/44 |
| | --- | | |
| A | US-A-4 289 558 (B. EICHENBAUM et al.)<br>* Column 2, lines 22-28; column 6, lines 42-43; column 7, lines 47-53; figures 1,9 * | 1,2 | |
| | ----- | | |

The present search report has been drawn up for all claims

| Place of search | Date of completion of the search | Examiner |
|---|---|---|
| THE HAGUE | 12-05-1986 | WESBY P.B. |